# EUROPEAN PATENT SPECIFICATION

(11) **EP 1 801 740 B1**
(45) Date of publication and mention of the grant of the patent: **09.04.2014**
(21) Application number: 06021188.5
(22) Date of filing: 10.10.2006
(51) Int. Cl.: G06K 19/077, G06F 13/40

(54) **Interface for a removable electrical card**
Schnittstelle für eine abnehmbare elektrische Karte
Interface pour une carte électrique amovible

(30) Priority: 22.12.2005 US 753328 P; 27.06.2006 US 426706
(43) Date of publication of application: 27.06.2007
(73) Proprietor: ASUSTeK Computer Inc., Taipei City 112 (TW); C-One Technology Corp., Hsinchu 300 (TW); Industrial Technology Research Institute, Hsinchu 310 (TW); Innodisk Corporation, Taipei 114 (TW); Prolific Technology Inc., Taipei City 105 (TW)
(72) Inventor: Yu, Gordon, Taipei Taiwan 114 (CN); Liu, Chih-Yuan, Jhubei City Hsinchu County Taiwan 302 (CN); Hsieh, Hsiang-An, Branciao City Taipei County Taiwan 220 (CN); Lee, Chung Liang, Neihu District Taipei Taiwan 114 (CN); Lin, Chanson, Juhbei City Hsinchu County Taiwan 302 (CN)
(74) Representative: Marchand, André

(56) References cited:
- US-A1- 2002 049 887
- US-A1- 2003 112 613
- US-A1- 2003 229 746
- US-A1- 2004 182 938

## Description

### FIELD OF THE INVENTION

The present invention relates generally to a removable electronic device and, more particularly, to a removable electrical interface device and method of operating or detecting a removable electrical interface.

### BACKGROUND OF THE INVENTION

A memory card is commonly known as a small portable package containing digital memory, such as an array of non-volatile memories like flash memories, EPROMs, or EEPROMs (electrically erasable and programmable read only memory). Memory cards have gained popularity as a device for storing a substantial amount of bytes of data from personal computers, notebook computers, personal electronic assistants, cellular telephones, cameras and other electronic devices that support removable data storage.

In general, a memory card includes exposed electrical contacts on its surface to allow easy connection to and removal from a receptacle of a host electronic system or device, particularly portable devices. A number of standards for a memory card have been implemented, including the MultiMedia Card ("MMC") by the MultiMedia Card Association ("MMCA") of Cupertino, California, and the Secure Digital ("SD") card by the Secure Digital Card Association ("SDA"). An MMC card is a compact, removable memory card for storing and retrieving digital information in small, low power devices. MMC has been used in many mobile electronic applications, such as music players, mobile phones, personal digital assistants (PDAs), digital cameras, voice recorders, and GPS navigation devices. An SD card is a flash memory card, which has been used in portable devices like digital cameras and handheld computers.

Another known standard for a removable memory card, although not limited to memory storage, is the Universal Serial Bus ("USB"). USB is a high-speed serial bus that supports devices such as printers, keyboards, scanners, pointing devices, and PDAs. USB has become a standard within the computer industry as this protocol affords networking of multiple devices with minimal connections and increased user friendliness. USB is currently defined by the Universal Serial Bus Specification, written and controlled by USB Implementers Forum, Inc., a non-profit corporation founded by a group of companies that developed the USB specification. The specification covers all aspects of USB operations, including electrical, mechanical, and communications characteristics and specifications. One significant feature of the USB is that it allows a peripheral device to store information about itself, and to provide such information upon request by the host. This obviates the need for the host, be it a computer, operating system, or application program, to maintain this information for many different devices. Instead, the device itself stores and provides the information.

In the evolution of memory cards, there is a need for memory cards that consume low power and provide higher accessing speed, while retaining backward compatibility with existing protocols such as the MMC, SD and USB specifications.

### BRIEF SUMMARY OF THE INVENTION

A novel removable memory card standard is disclosed. The standard of the present invention includes both detection schemes and hardware interface compatibility requirements. Furthermore, the novel standard is backward compatible with the MMC, SD and USB applications.

In accordance with an embodiment of the present invention, there is provided a removable electrical interface device for transferring data to and from a host, is adapted to operate in one of a universal serial bus compatible mode, a Mu mode and a non-USB compatible mode, and comprising a first row of contact pads, capable of supporting at least one of USB Standard-A connection, Mu mode connection, or non-USB compatible mode connection; and a second row of contact pads capable of supporting at least one of the Mu mode connection or the non-USB compatible mode connection.

According to one embodiment, the first row of contact pads is connectible to or removable from a USB Standard-A receptacle of the host.

According to one embodiment, the first row of contact pads is disposed near a first side, of the removable electrical interface device in an insertion direction towards the host, and the second row of contact pads is disposed closer to the first row of contact pads than a second side of the removable electrical interface device in the insertion direction.

According to one embodiment, the first row of contact pads is disposed near a first side of the removable electrical interface device in an insertion direction towards the host, and the second row of contact pads is disposed near a second side of the removable electrical interface device in the insertion direction.

According to one embodiment, the device further comprises a notch, formed in a corner of the removable electric interface device.

According to one embodiment, one of the first row of contact pads is disposed farther to the first side than the other of the first row of contact pads to facilitate card detection.

According to one embodiment, one of the second row of contact pads is disposed farther to the first side than the other of the second row of contact pads to facilitate card detection.

According to one embodiment, at least one of the second row of contact pads extends in an insertion direction towards the host to exceed one end of at least one of the first row of contact pads.

According to one embodiment, the device comprises an electronic card comprising said first and second rows of contact pads, and a carrier for supporting the electronic card.

According to one embodiment, the carrier is suitable for use with one of a USB Standard-A receptacle and an electronic device having a receptacle width smaller than the USB Standard-A receptacle.

According to one embodiment, the carrier includes at least one guide trench extending substantially in parallel with an insertion direction of the carrier.

According to one embodiment, the device further comprises a connector capable of providing extended-USB connection.

According to one embodiment, the connector includes a Mini USB connector.

According to one embodiment, the device further comprises an adapter capable of receiving the electronic card and the carrier.

According to one embodiment, the adapter supports one of 4-bit MMC connection and 8-bit MMC connection.

According to one embodiment, the adapter supports one of 4-bit MMC connection and 4-bit SD connection.

According to one embodiment, the device comprises an adapter which comprises said first and second rows of contact pads, a first terminal being connectible to or removable from a USB Standard-A receptacle of the host; and a second terminal capable of receiving a memory card.

According to one embodiment, the second terminal is capable of receiving one of an MMC micro memory card and a micro SD memory card.

According to one embodiment, the second terminal capable of receiving a memory card comprising an indentation on a peripheral thereof.

According to one embodiment, the device comprises a common bus, a non-USB interface controller, a USB physical layer circuit, a USB device controller 37, and a wrapper to convert data into serial data recognizable by the USB device controller, or vice versa.

According to one embodiment, the device comprises an interface mode detector arranged between, on the one hand, the common bus, and on the other hand, the non-USB interface controller, the USB physical layer circuit and the wrapper, to detect a mode of operation to distinguish among a non-USB mode, a USB mode or a Mu mode.

According to one embodiment, the device comprises a control unit including a central control logic and a bus control logic for selecting one of non-USB interface controller, wrapper and USB physical layer circuit over common bus.

It is to be understood that both the foregoing general description and the following detailed description are exemplary and explanatory only and are not restrictive of the invention, as claimed.

The accompanying drawings, which are incorporated in and constitute a part of this specification, illustrate one embodiment of the present invention and together with the description, serves to explain the principles of the invention.

The invention is defined according to claim 1.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

In the drawings:

FIGs. 1A, 1B and 1C are functional block diagrams of general applications of an electrical interface device in accordance with one embodiment of the present invention;

FIG. 2 is a functional block diagram of the general applications of an electrical interface device in accordance with another embodiment of the present invention;

FIGs. 3A to 3D are diagrams of electrical interface devices in accordance with embodiments of the present invention;

FIG. 4A is a pin arrangement of an electrical interface device in accordance with one embodiment of the present invention;

FIG. 4B is a pin assignment chart of the electrical interface device illustrated in FIG. 4A;

FIG. 5A is a pin arrangement of an electrical interface device in accordance with another embodiment of the present invention;

FIG. 5B is a pin assignment chart of the electrical interface device illustrated in FIG. 5A;

FIG. 6A is a pin assignment of an electrical interface device in accordance with still another embodiment of the present invention;

FIG. 6B is a pin assignment chart of the electrical interface device illustrated in FIG. 6A;

FIG. 7A is a diagram of an electrical interface device in accordance with one embodiment of the present invention;

FIG. 7B is a diagram of an electrical interface device in accordance with another embodiment of the present invention;

FIG. 7C is a diagram of an adapter for use with the electrical interface device illustrated in FIG. 7A in accordance with one embodiment of the present invention;

FIG. 7D is a diagram of an adapter for use with the electrical interface device illustrated in FIG. 7A in accordance with another embodiment of the present invention;

FIG. 8A is a schematic diagram of an electrical interface device in accordance with one embodiment of the present invention;

FIG. 8B is a schematic top elevational view of a micro memory card suitable for use with the electrical interface device illustrated in FIG. 8A;

FIG. 9 is a diagram of an electrical interface device in accordance with another embodiment of the present invention;

FIG. 10A is a diagram of an electrical interface device in accordance with still another embodiment of the present invention;

FIGs. 10B and 10C are functional block diagrams of the electrical interface device illustrated in FIG. 10A;

FIG. 11 is a flow diagram illustrating a method for interface mode detection at a device side; and

FIG. 12 is a flow diagram illustrating a method for interface mode detection at a host side.

### DETAILED DESCRIPTION OF THE INVENTION

In this detailed description, for purposes of explanation, numerous specific details are set forth to illustrate embodiments of the present invention. One skilled in the art will appreciate, however, that embodiments of the present invention may be practiced without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the scope of embodiments of the present invention.

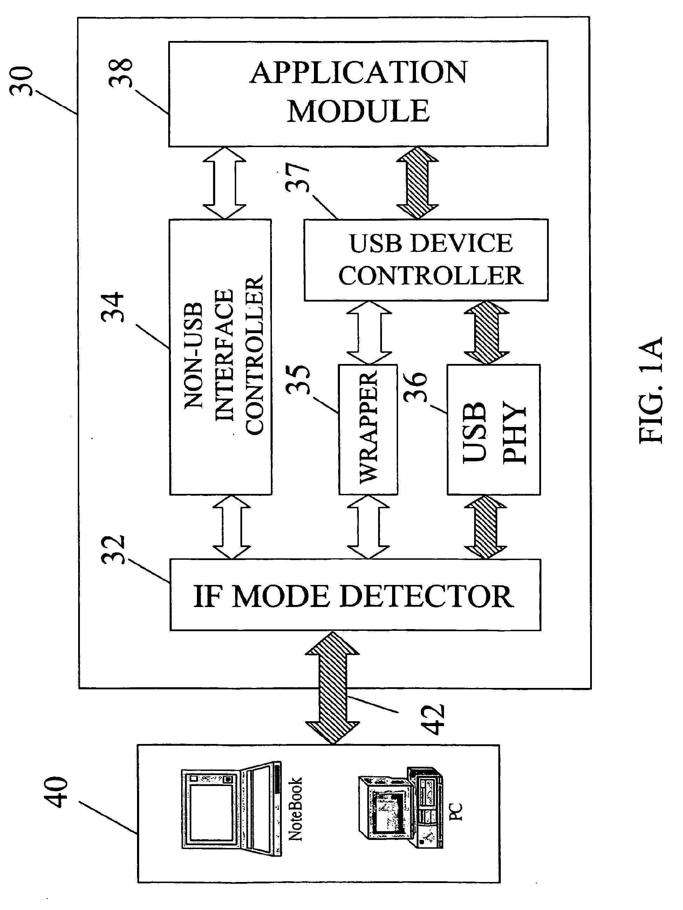

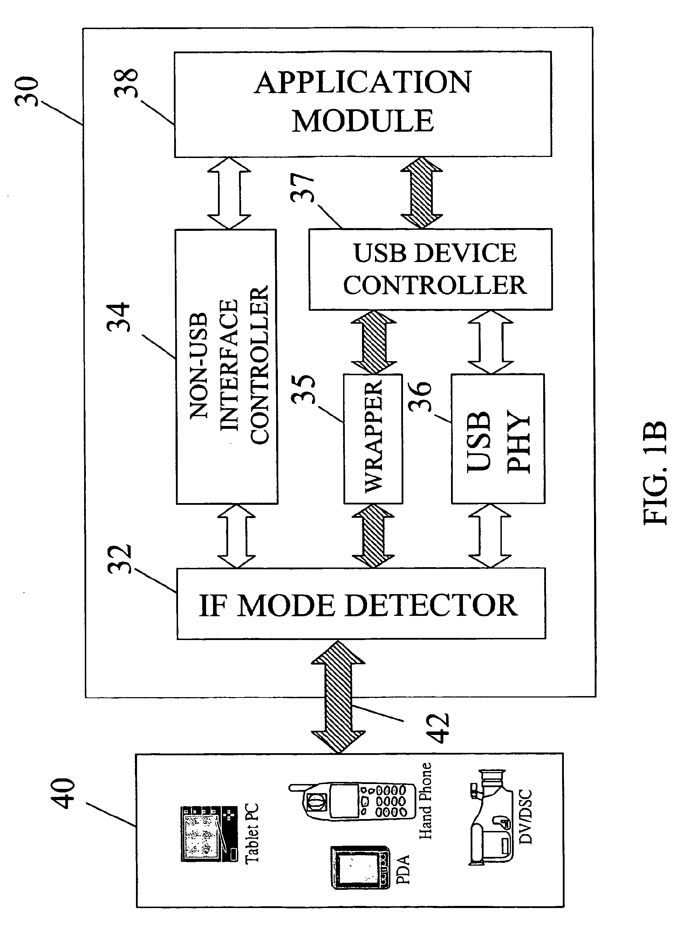

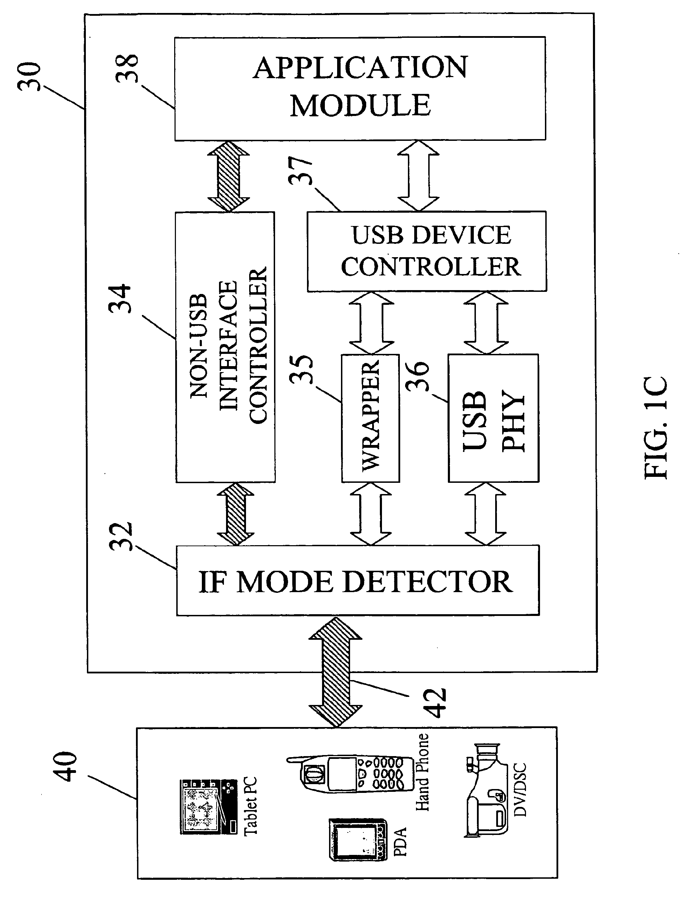

FIGs. 1A, 1B and 1C are functional block diagrams of general applications of a removable electrical interface device 30 in accordance with one embodiment of the present invention. Electrical interface device 30 is able to support several modes of operations, such as those compatible with USB applications, at least one of non-USB applications, including MMC, CF (compact flash), SM (smart media) and SD (security digital) applications, and Mu applications. A Mu application refers to a digital-parallel USB bus, which supports a low-power interface for mobile applications. The Mu card device and interface have been disclosed in U.S. Patent 2006/0053241 entitled "Removable Electronic Device and Method Thereof". The USB compatible mode, for example, includes USB 2.0 application, and the MMC compatible mode includes one of MMC 4.0 or MMC SPI (serial-peripheral interface) applications.

The electrical interface device 30 includes a 1-, 4-, 8- or 16-bit interface, and provides low voltage support of 5V/3.3V/1.8V, with zero power consumption during standby. In addition, electrical interface device 30 is able to support a wide bandwidth from approximately 50KB/sec to 120MB/sec. In contrast, MMC 4.0 supports 1-, 4- or 8-bit data transfer at a maximum speed of 52 MB/sec, and USB 2.0 supports data transfer at a maximum speed of 60 MB/sec. Consequently, electrical interface device 30 provides high-speed applications while retaining backward compatibility with at least USB, MMC and MMC SPI applications.

FIG. 1A is a functional block diagram of electrical interface device 30 operating at a USB mode. Referring to FIG. 1A, electrical interface device 30 includes an interface (IF) mode detector 32, a non-USB interface controller 34, a wrapper 35, a universal serial bus (USB) physical layer (PHY) circuit 36, a USB device controller 37, and an application module 38. IF mode detector 32 detects a mode of operation to distinguish among a non-USB mode, a USB mode, or a Mu mode when electrical interface device 30 is inserted into a host 40. Host 40, for example, a notebook, a personal computer (PC), a cell phone, a tablet PC, a PDA or a DV/DSC, may include a card reader (not shown) for receiving electrical interface device 30. In the present embodiment, IF mode detector 32 detects whether a host 40, to which electrical interface device 30 is connected, is in compliance with the USB specifications. USB device controller 37 controls data transfer over a common bus 42 between host 40 and application module 38 via USB PHY circuit 36. Application module 38 functions to serve as a memory storage or an input/output (I/O) interface, depending on the operation mode detected.

FIG. 1B is a functional block diagram of electrical interface device 30 operating at a Mu mode. Referring to FIG. 1B, IF mode detector 32 detects whether a host 40, to which electrical interface device 30 is connected, is in compliance with the Mu specifications. USB device controller 37 controls data transfer between host 40 and application module 38 via wrapper 35. Wrapper 35, which wraps a call to a function or program inside another function or program, functions to convert 16-bit data into serial data recognizable by USB device controller 37, or vice versa. As such, wrapper 35 functions to bridge between a Mu bus and a UTMI (USB 2.0 Transceiver Macrocell Interface) bus. UTMI, which has been developed to define the interface specifications of the physical layer circuits and part of the logical layer circuits of the USB 2.0, enables a data transfer rate of 480 Mbps in high speed (HS) mode, which is significantly higher than that of the USB 1.1, while maintains backward compatibility with the USB 1.1 standard.

FIG. 1C is a functional block diagram of electrical interface device 30 operating at a non-USB mode. Referring to FIG. 1C, IF mode detector 32 detects whether a host 40, to which electrical interface device 30 is connected, is in compliance with one of the non-USB specifications. The non-USB interface controller 34 controls data transfer between host 40 and application module 38. The non-USB application includes but is not limited to one of MMC 4.0, a 1-, 4- or 8-bit interface, and MMC SPI, a 1-bit interface.

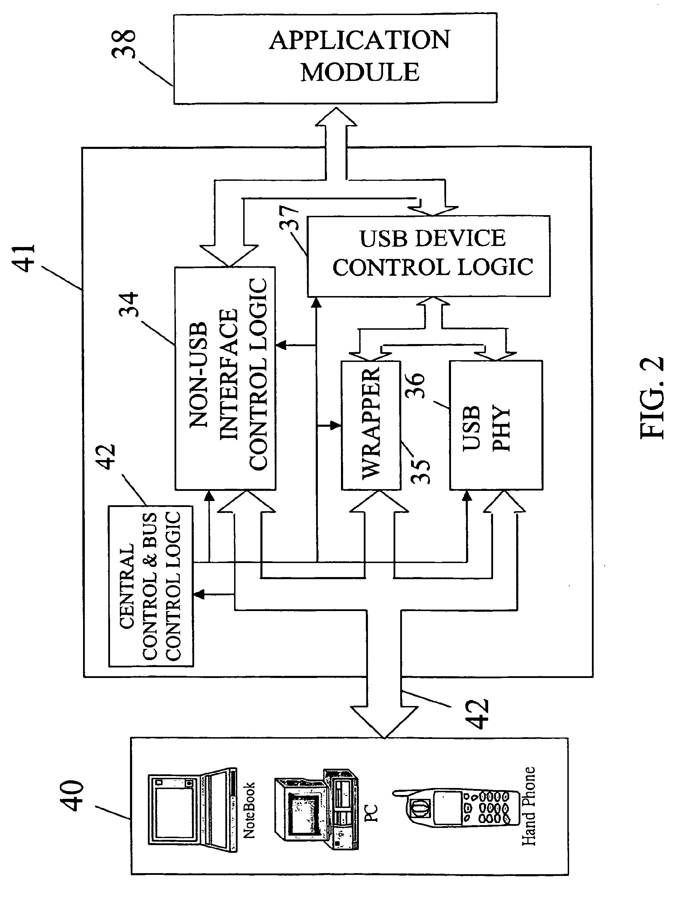

FIG. 2 is a functional block diagram of general applications of an electrical interface device 41 in accordance with another embodiment of the present invention. Referring to FIG. 2, electrical interface device 41 controls data transfer between host 40 and application module 38. Electrical interface 41 includes a similar structure to electrical interface device 30 illustrated in FIGs. 1A, 1B and 1C, except that IF mode detector 32 is eliminated and a control unit 42 is added. Control unit 42 further includes a central control logic (not shown) for controlling system operations such as data and command transmission. Control unit 42 also includes a bus control logic (not shown) for selecting one of non-USB interface controller 34, wrapper 35 and USB PHY circuit 36 for communicating with host 40 over common bus 42.

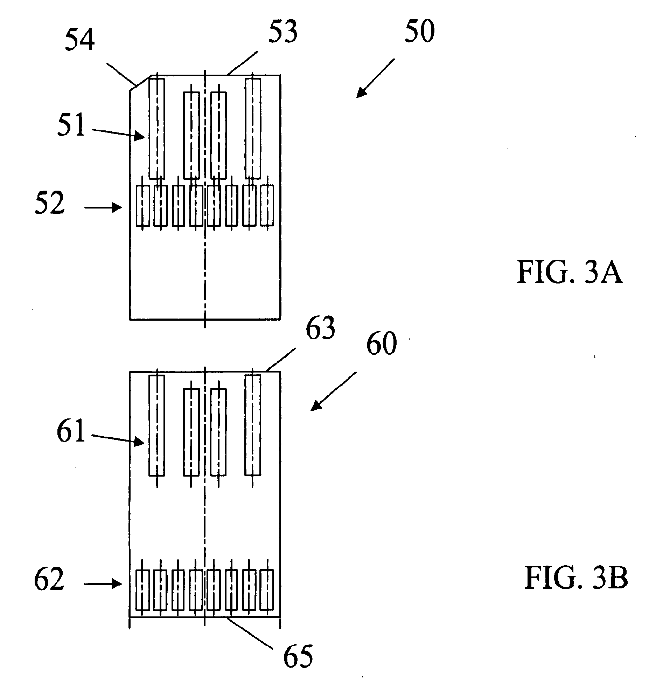

FIGs. 3A to 3D are diagrams of electrical interface devices in accordance with embodiments of the present invention. An electrical interface device according to the present invention is compatible with the USB Standard-A for connection with and removable from a USB Standard-A receptacle. USB connectors may be generally classified as Standard-A and Standard-B connectors. A Standard-A plug is oriented upstream towards a host system, while a Standard-B plug is oriented downstream towards a USB device. A Standard-A receptacle is downstream output from a USB host or hub, while a Standard-B receptacle is upstream input to a USB device or hub.

Referring to FIG. 3A, an electrical interface device 50 includes a first row of contact pads 51 and a second row of contact pads 52. The first row of contact pads 51, disposed near one side 53 of electrical interface device 50, is provided for connection with or removable from a USB Standard-A receptacle at one side 53. The second row of contact pads 52, disposed close to the first row of contact pads 51, is provided for the Mu interface or the non-USB interface communications. The second row of contact pads 52 supports a 4- or 8-bit bus in an interleaving format. The electrical interface device 50 includes a notch 54 on the upper left-hand corner to prevent incorrect insertion of the electrical interface device 50. Alternatively, the electrical interface device 50 includes a notch on the upper right-hand corner to prevent incorrect insertion.

Referring to FIG. 3B, an electrical interface device 60 has a similar structure to the electrical interface device 50 shown in FIG. 3A, except that a second row of contact pads 62 is disposed at another side 65 of electrical interface device 60. With a first row of contact pads 61 disposed at one side 63 and a second row of contact pads 62 disposed at another side 65, electrical interface device 60 is allowed to connect to a host device at either side 63 or side 65.

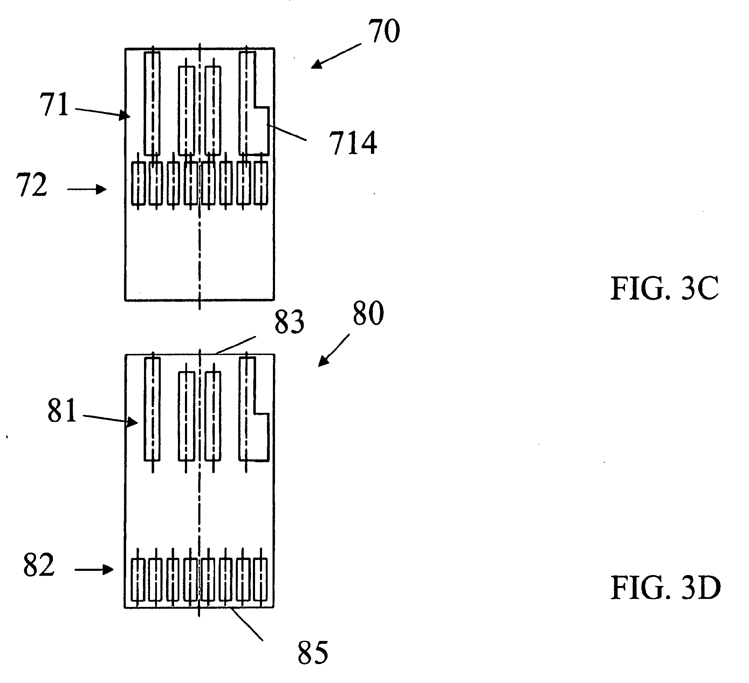

Referring to FIG. 3C, an electrical interface device 70 has a similar structure to the electrical interface device 50 shown in FIG. 3A, except that a contact pad 714 of a first row of contact pads 71 has a larger area to facilitate card detection. In one embodiment according to the present invention, contact pad 714 is electrically grounded or connected to a reference voltage level, and is pulled high when electrical interface device 50 is inserted into a host.

Referring to FIG. 3D, an electrical interface device 80 has a similar structure to the electrical interface device 70 shown in FIG. 3C, except that a second row of contact pads 82 is disposed at another side 85 of electrical interface device 80. With a first row of contact pads 81 disposed at one side 83 and a second row of contact pads 82 disposed at another side 85, electrical interface device 80 is allowed to connect to a host device at either side 83 or side 85.

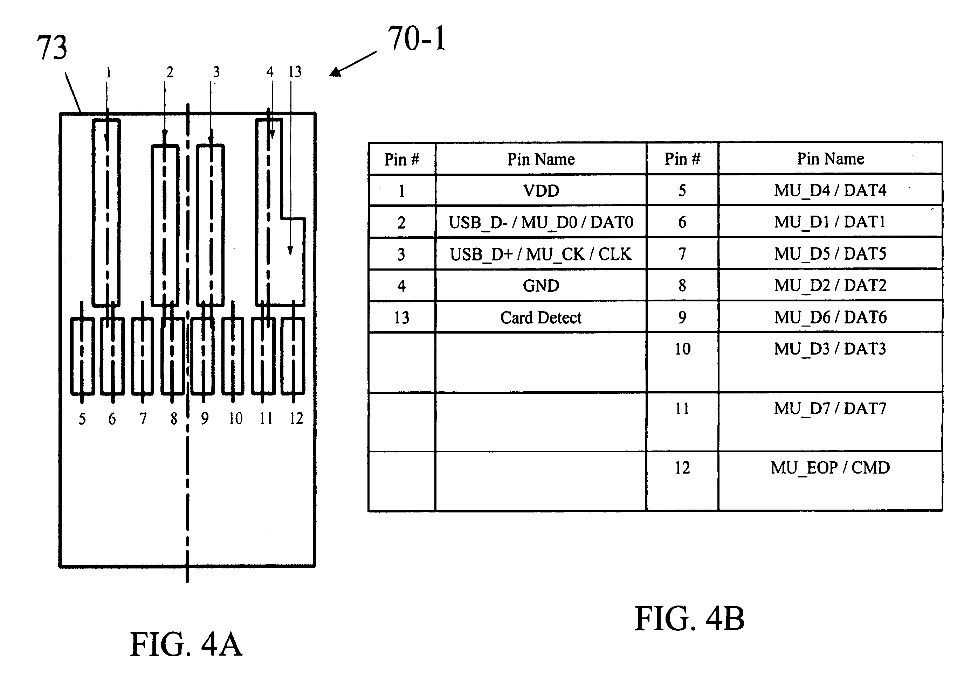

FIG. 4A is a pin layout of an electrical interface device 70-1 in accordance with one embodiment of the present invention. Referring to FIG. 4A, the electrical interface device 70-1, having a similar structure to electrical interface device 70 illustrated in FIG. 3C, includes a first row of pins with pin numbers 1 to 4 and 13 for the USB Standard-A interface communications, and a second row of pins with pin numbers 5 to 12 for the Mu and the non-USB interface communications.

FIG. 4B is a pin assignment chart of the electrical interface device 70-1 illustrated in FIG. 4A. Referring to FIG. 4B, the pin numbered 4 is electrically grounded or connected to a reference voltage level. The pin numbered 13, which is incorporated with the pin numbered 4 in a contact pad, serves as a card detection pin to identify the Mu interface mode or the non-USB interface mode. In one embodiment according to the present invention, a command format for the non-USB interface mode, for example, an MMC interface mode, is "40h, 00h, 00h, 00h, 00h, 95h", while a command format for the Mu interface mode is one different from the MMC command format. The pin numbered 4 is disposed closer to a side 73 of the electrical interface device 70-1 than the pin numbered 13 such that the voltage level of the pin numbered 13 is not pulled high until electrical interface device 70-1 is inserted to a host from side 73.

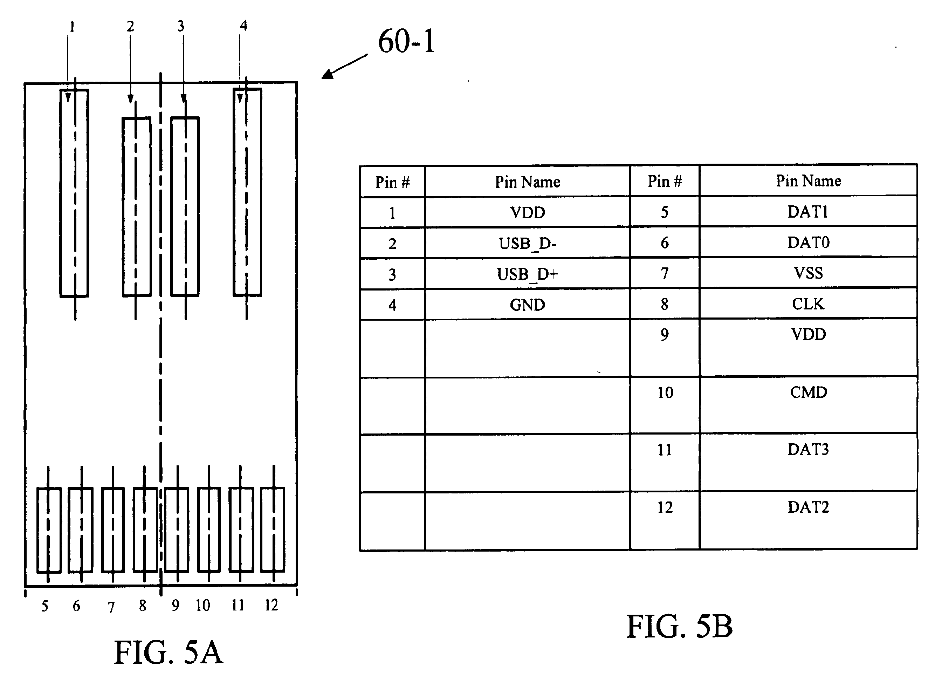

FIG. 5A is a pin arrangement of an electrical interface device 60-1 in accordance with another embodiment of the present invention. FIG. 5B is a pin assignment chart of the electrical interface device 60-1 illustrated in FIG. 5A. Referring to FIG. 5A, the electrical interface device 60-1 includes a similar structure to electrical interface device 60 illustrated in FIG. 3B.
Referring to FIG. 5B, the electrical interface device 60-1 includes a first row of pins with pin numbers 1 to 4 for the USB Standard-A interface communications, and a second row of pins with pin numbers 5 to 12 for the Mu and the non-USB interface communications.

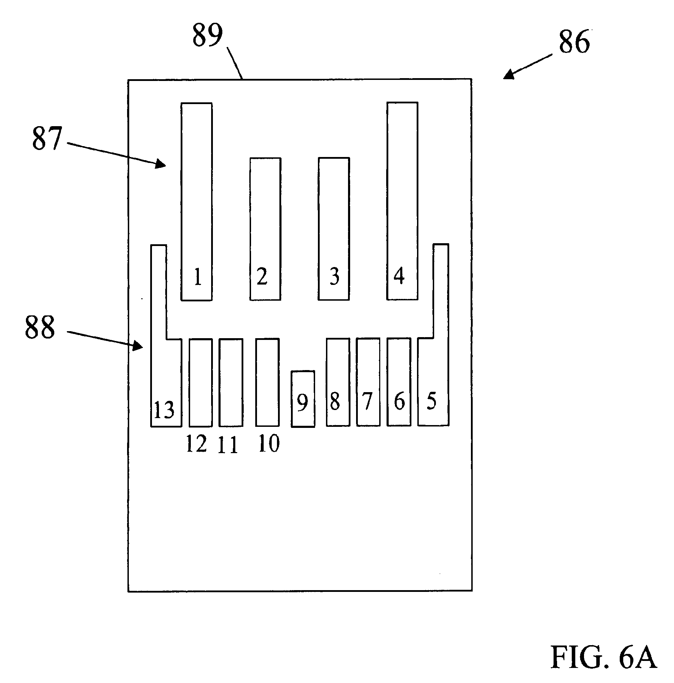

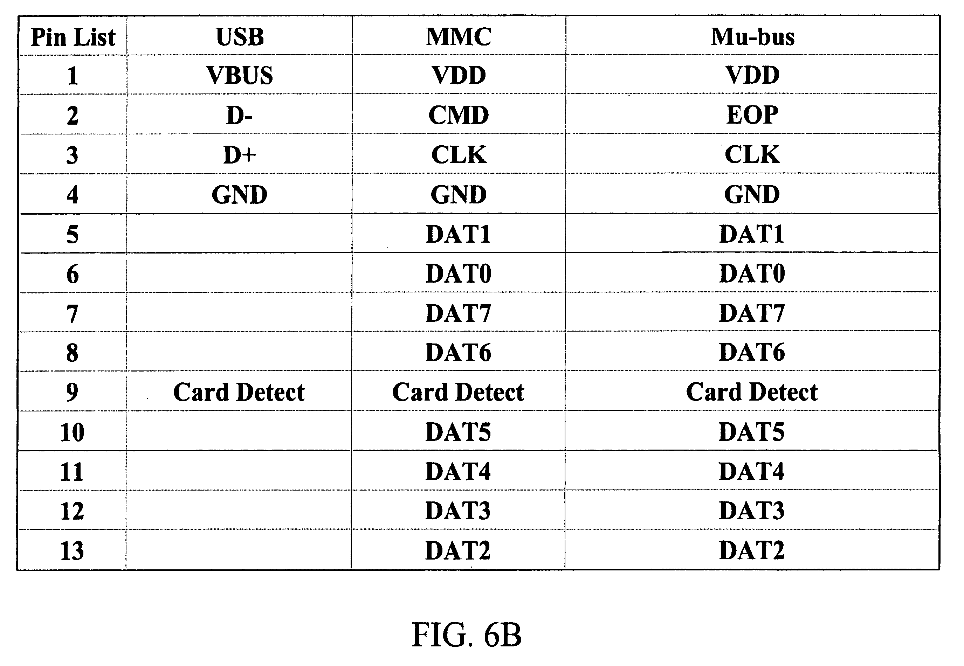

FIG. 6A is a pin arrangement of an electrical interface device 86 in accordance with one embodiment of the present invention. FIG. 6B is a pin assignment chart of the electrical interface device 86 illustrated in FIG. 6A. Referring to FIG. 6A, the electrical interface device 86 includes a first row of pins 87 including pins numbered 1 to 4 for the USB Standard-A interface communications, and a second row of pins 88 including pins numbered 5 to 13 for the Mu and the non-USB interface communications. Pins 13 and 5 of the second row of pins 88 extend toward a side 89 of electrical interface device 86 to exceed one ends (not numbered) of pins 1 and 4 of first row of pins 87, respectively. The extending portions of pins 13 and 5 may improve signal shielding for electrical interface device 86. Pin 9, also referring to FIG. 6B, serves as a card detection pin. Pin 9 is disposed farther than other pins of the second row of pins 88 to side 89 such that pin 9 is the last pin to electrically contact a host when electrical interface device 86 is inserted into the host. As a result, electrical interface device 86 is not powered on and therefore will not be destroyed by a power-on voltage if electrical interface device 86 is incorrectly inserted to the host.

Referring to FIG. 6B, the first row of pins 1 to 4 not only supports the USB Standard-A connection when electrical interface device 86 illustrated in FIG. 6A operates in the USB mode, but also supports the Mu mode and non-USB mode connection when electrical interface device 86 operates in the Mu mode and the non-USB mode, respectively.

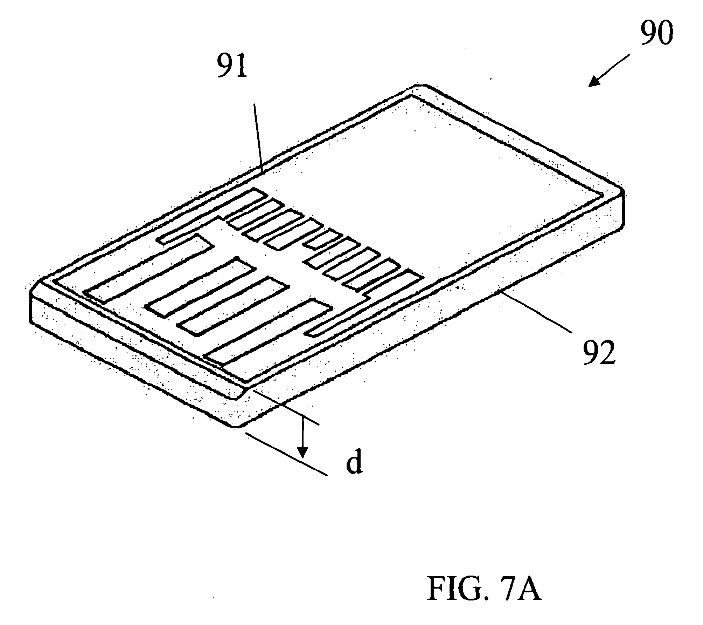

FIG. 7A is a diagram of an electrical interface device 90 in accordance with one embodiment of the present invention. Referring to FIG. 7A, electrical interface device 90 includes an electronic card 91 and a carrier 92 into which the electronic card 91 is housed. Electronic card 91 provides substantially the same functions as the electrical interface devices illustrated in the previously discussed embodiments. Carrier 92 includes, but not limited to, a plastic passive component. In one embodiment, electrical interface device 90 or carrier 92 has a thickness "d" of approximately 1 mm (millimeter), which is suitable for use with small consumer electronics. Alternatively, electrical interface device 90 or carrier 92 has a thickness "d" of approximately 2 mm (millimeter), which is suitable for use with a USB Standard-A receptacle.

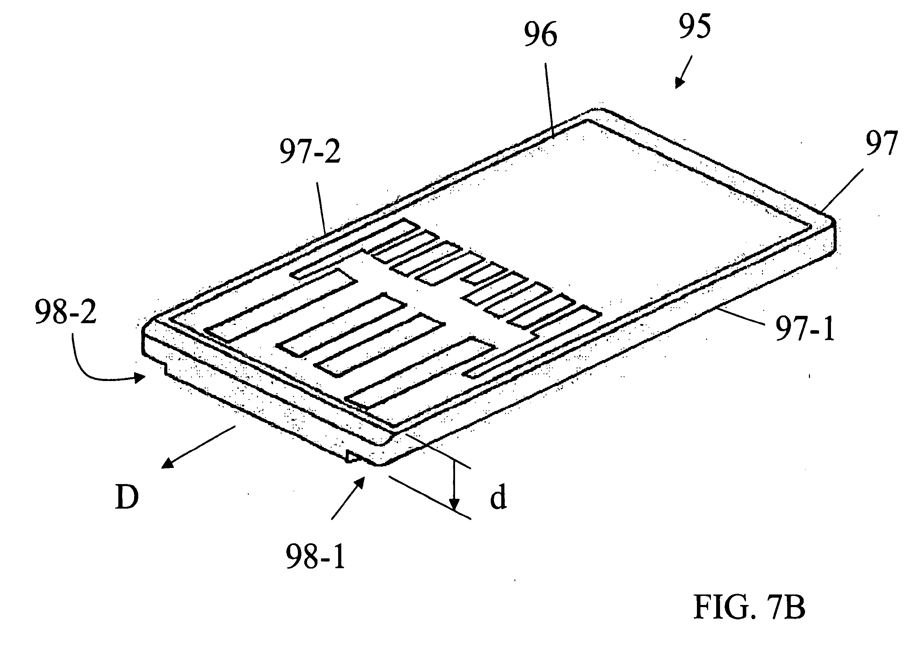

FIG. 7B is a diagram of an electrical interface device 95 in accordance with another embodiment of the present invention. Referring to FIG. 7B, electrical interface device 95 includes an electronic card 96 and a carrier 97. Carrier 97 includes a first guide trench 98-1 extending substantially in parallel with a first side 97-1 of carrier 97. With first guide trench 98-1, carrier 97 may include a more compact holder (not shown) at a host-side connector (not shown) for receiving electrical interface device 95 in a direction labeled as "D," as compared to carrier 92 illustrated in FIG. 7A, having the same thickness d. Carrier 97 may further include a second guide trench 98-2 extending substantially in parallel with a second side 97-2 of carrier 97, which further facilitates the compactness of the holder.

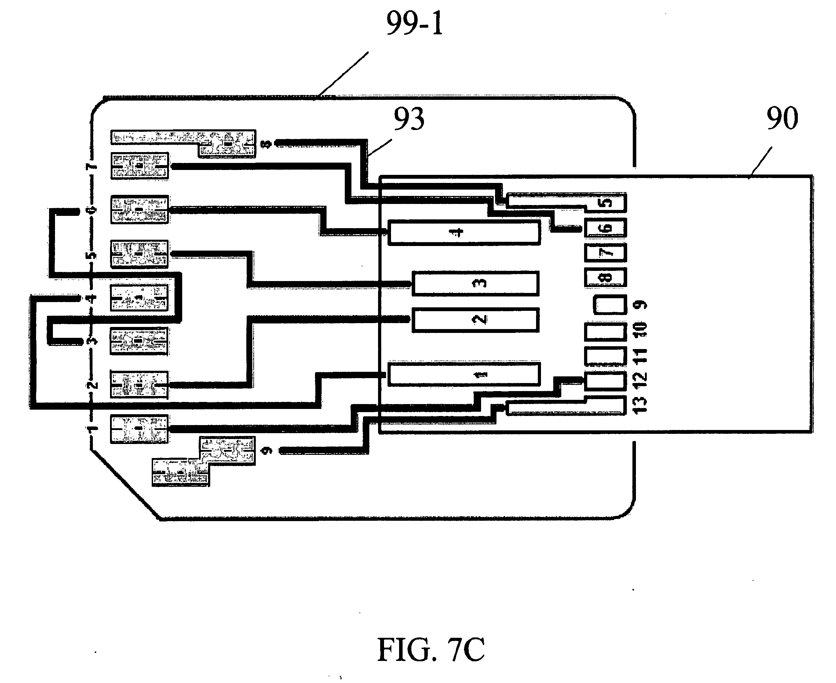

FIG. 7C is a diagram of an adapter 99-1 for use with electrical interface device 90 illustrated in FIG. 7A in accordance with one embodiment of the present invention. Referring to FIG. 7C, adapter 99-1 is capable of receiving electrical interface device 90. Adapter 99-1 is electrically connected to electrical interface device 90 through conductive lines 93 and functions to serve as an MMC card or SD card once electrical interface device 90 is inserted thereto. In the present embodiment, adapter 99-1 supports 4-bit MMC or SD connection. Specifically, also referring to the pin assignment chart illustrated in FIG. 6B, each of the four pins 5, 6, 12 and 13 of the second pad row of electrical interface device 90 for MMC or non-USB connection is electrically connected to a corresponding pad of adapter 99-1.

FIG. 7C shows an example that the adapter 99-1 suitable for use with electrical interface device 90. One skilled in the art will recognize that adapter 99-1 is also suitable with electrical interface device 95 illustrated in FIG. 7B. In that case, adapter 99-1 may be made with a slimmer profile.

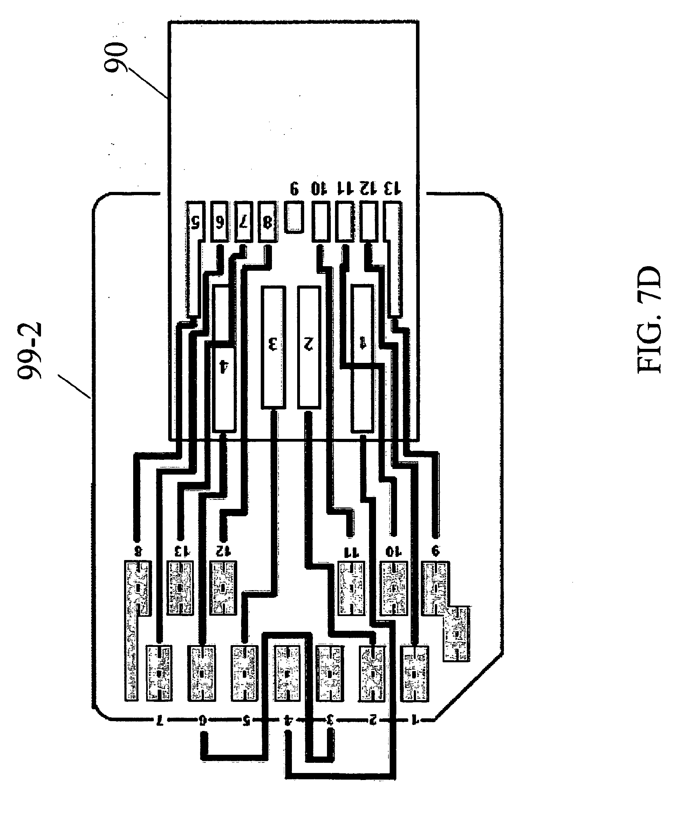

FIG. 7D is a diagram of an adapter 99-2 for use with electrical interface device 90 illustrated in FIG. 7A in accordance with another embodiment of the present invention.
Referring to FIG. 7D, the adapter 99-2 supports 8-bit MMC connection. Specifically, also referring to FIG. 6B, each of the eight pins 5 to 8 and 10 to 13 of the second pad row of electrical interface device 90 for MMC or non-USB connection is electrically connected to a corresponding pad of adapter 99-2. Alternatively, adapter 99-2 is suitable with electrical interface device 95 illustrated in FIG. 7B. In that case, adapter 99-2 may be made with a slim profile.

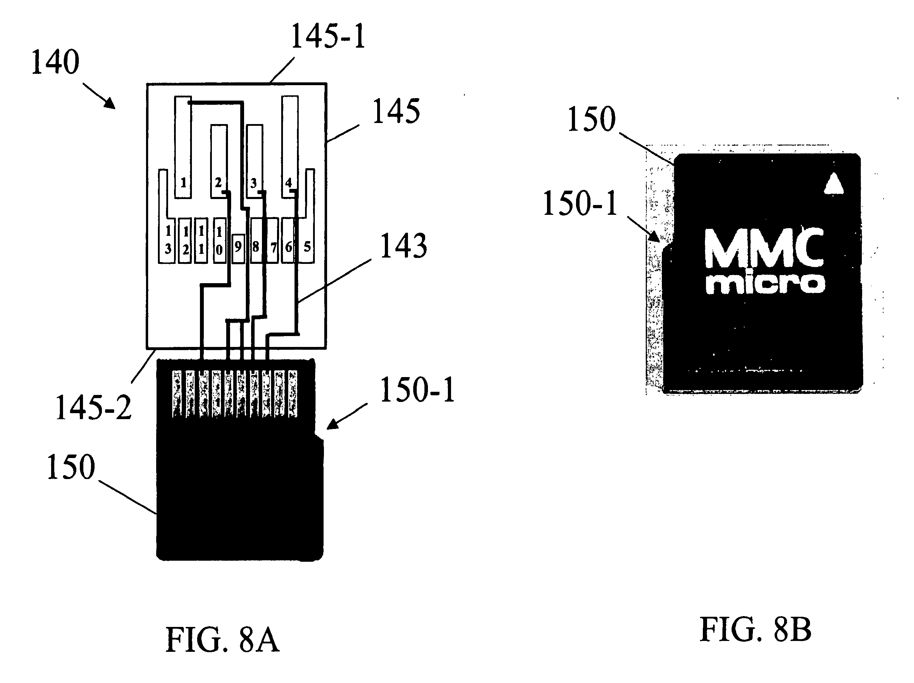

FIG. 8A is a schematic diagram of an electrical interface device 140 in accordance with one embodiment of the present invention. Referring to FIG. 8A, electrical interface device 140 includes an adapter 145 further including a first row of pins numbered 1 to 4 and a second row of pins numbered 5 to 13. The pin assignment and pin arrangement of the pins 1 to 13 of the adapter 145 are similar to those of the electrical interface device 86 illustrated in FIG. 6A and therefore will not be repeated herein. Adapter 145 further includes a first end 145-1 connectible to or removable from a host, and a second side 145-2 for receiving a micro memory card 150. Micro memory card 150, when inserted into adapter 145, is electrically connected to the first and second rows of pins of adapter 145. For simplicity, only conductive lines 143 for establishing electrical connections between the first row of pins 1 to 4 and the micro memory card 150 are illustrated. To prevent incorrect insertion to electrical interface device 140, micro memory card 150 includes an indentation 150-1 on the peripheral thereof.

FIG. 8B is a schematic top elevational view of micro memory card 150 suitable for use with electrical interface device 140 illustrated in FIG. 8A. Referring to FIG. 8B, micro memory card 150 includes an MMC micro memory card or a micro SD memory card. The MMC micro memory card refers to an MMC-compatible card that supports MMC 4.0 applications and is backward compatibility with existing MMC protocols. The MMC micro memory card is a relatively small in size, approximately one-fourth the size of a full-size MMC card, and is tailored to fit the increasingly shrinking camera phones. The micro SD memory card refers to an SD-compatible flash memory card, approximately one-fourth the size of a full-size SD card. Micro SD memory cards are generally used in mobile phones, handheld global positioning system ("GPS") devices and portable audio players.

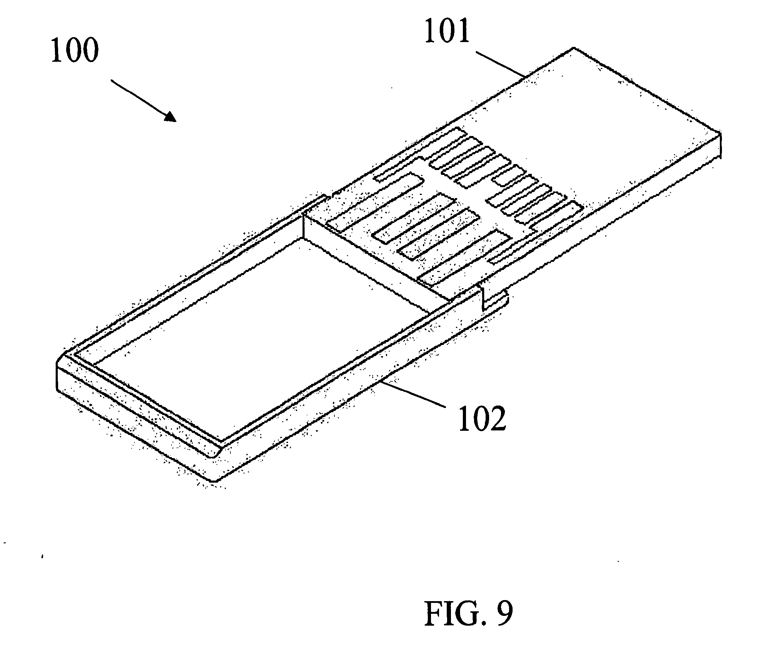

FIG. 9 is a diagram of an electrical interface device 100 in accordance with another embodiment of the present invention. Referring to FIG. 9, electrical interface device 100 includes an electronic card 101 and a carrier 102. Electronic card 101 is slidably movable with respect to carrier 102. Depending on actual applications, the thickness of carrier 102 may vary from 1 mm to 2 mm.

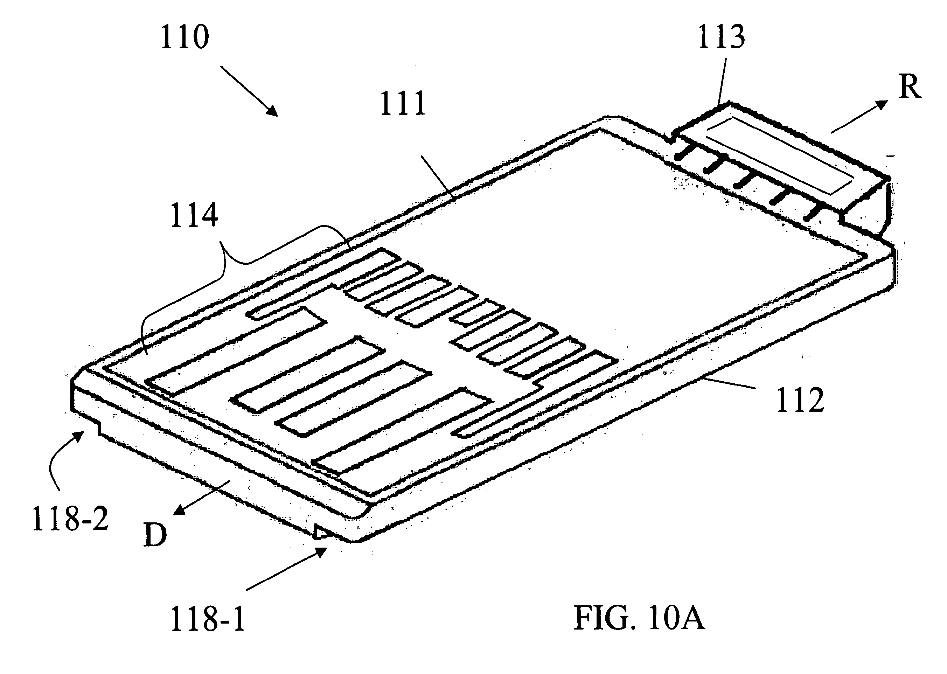

FIG. 10A is a diagram of an electrical interface device 110 in accordance with still another embodiment of the present invention. Referring to FIG. 10A, electrical interface device 110 includes an electronic card 111, a carrier 112 for supporting the electronic card 111, a first connector 114 and a second connector 113. First connector 114, including a first and a second row of contact pads, serves as a first interface for the USB Standard-A connection. Second connector 113, for example, a Mini USB connector, serves as a second interface for extended USB connection for electrical interface device 110. The Mini USB connector includes a smaller USB plug or receptacle, and is generally classified as Mini-A and Mini-B, which are specified by the On-The-Go Supplement to the USB 2.0 Specification (USB OTG).

Carrier 112 includes a first guide trench 118-1 extending substantially in parallel with an insertion direction, shown as "D" of first connector 114 or an insertion direction "R" of the second connector 113. As has been previously discussed with respect to FIG. 7B, first guide trench 118-1 facilitates the compactness of the holder or receptacle. Carrier 112 may further include a second guide trench 118-2 extending substantially in parallel with the insertion direction D or R, to further facilitate the compactness of the holder or receptacle.

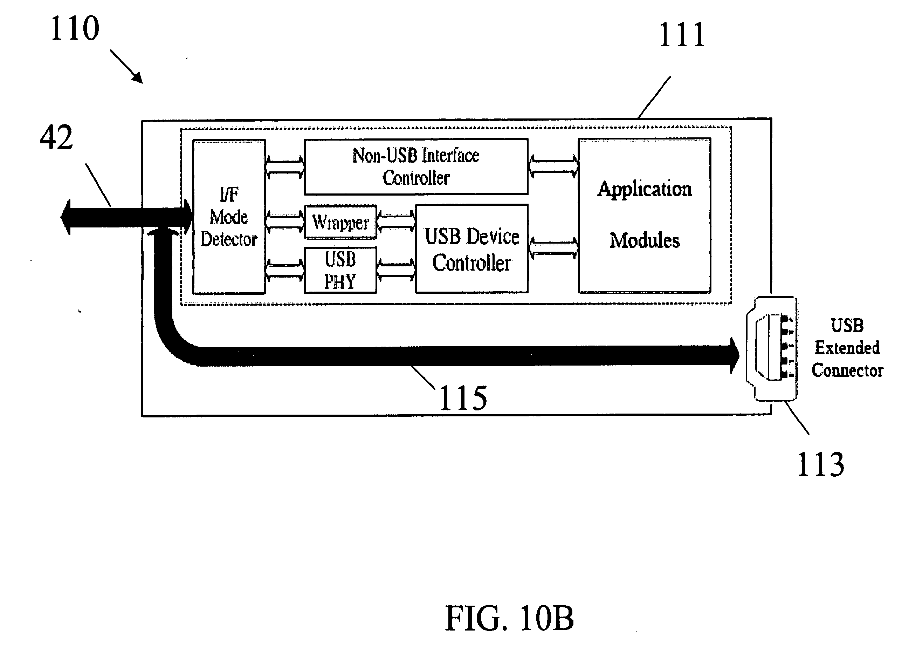

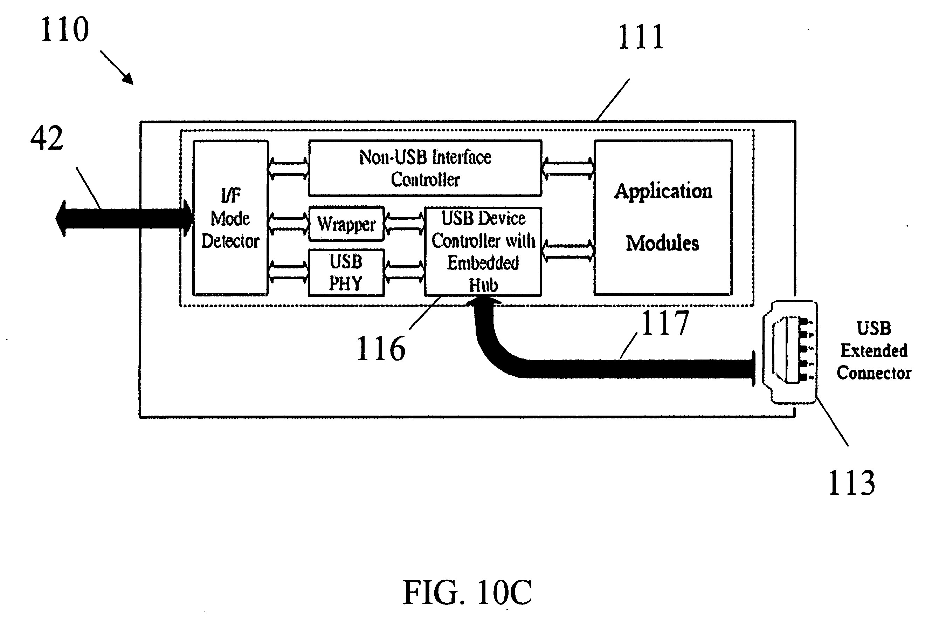

FIGs. 10B and 10C are functional block diagrams of electrical interface device 110 illustrated in FIG. 10A. Referring to FIG. 10B, extended USB connector 113 bypasses USB-compatible signals to common bus 42 over a USB bus 115. Alternatively, referring to FIG. 10C, electrical interface device 110 includes a USB device controller 116 further comprising an embedded USB hub for receiving USB-compatible signals from second connector 113 over a USB bus 117.

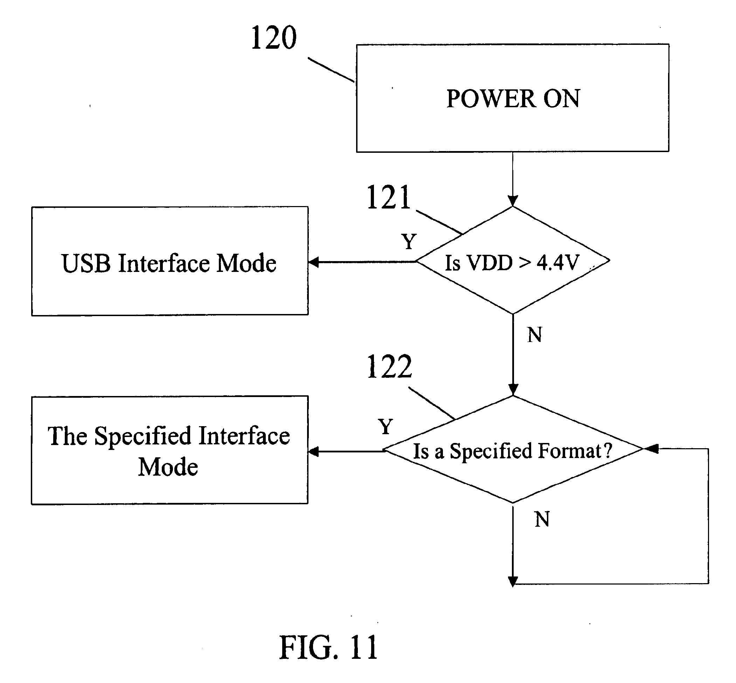

FIG. 11 is a flow diagram illustrating a method for interface mode detection on the device side. Referring to FIG. 11, a host to which an electrical interface device according to the present invention is connected is turned on at step 120. The power source voltage VDD at the host side is detected at step 121 to determine whether the VDD is equal to or greater than a voltage level a USB application requires. Normally, for USB signaling, the voltage level ranges from approximately 4.5V (volts) to 5.5V, while a non-USB application or a Mu application is operated at a voltage level of approximately 1.8V or 3.3V. At step 121, if the VDD level at the host side is equal to or greater than 4.4V, it is determined that the mode of operation is a USB application, for example, the USB 2.0. If the VDD level at the host side is smaller than 4.4V, at step 122, it is determined that the mode of operation is either a Mu application or a non-USB application, depending on a specified format, for example, a flag sent from the host.

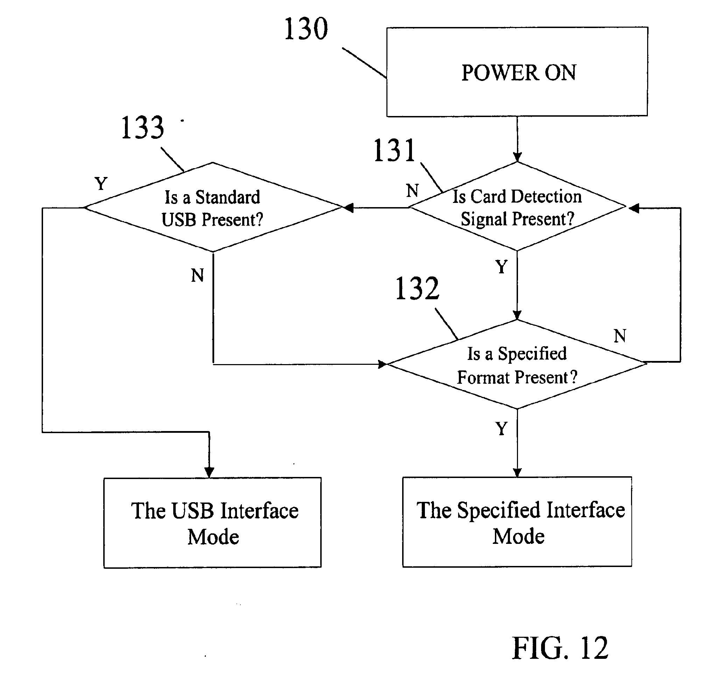

FIG. 12 is a flow diagram illustrating a method for interface mode detection at a host side. Referring to FIG. 12, the host is turned on at step 130. Next, at step 131, it is determined whether a Card-Detect signal is detected. The Card-Detect signal is present at pin numbered 13 illustrated in FIG. 4B or pin numbered 10 illustrated in FIG. 6B. In response to the Card-Detection signal, which means that an electrical interface device according to the present invention is in use, at step 132, it is determined that the mode of operation is either a Mu application or a non-USB application, depending on a specified format. The electrical interface device operates at the Mu mode if the specified format includes a Mu format and is responded by the electrical interface device. The electrical interface device operates in the non-USB mode if the specified format includes a format different from the Mu format and is responded by the electrical interface device. If the Card-Detect signal is not present, at step 133, it is determined whether the electrical interface device supports standard USB. If confirmative, the host determines that the electrical interface device operates in USB mode. Otherwise, it is determined that the mode of operation is either a Mu application or a non-USB application, depending on a specified format.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined by the appended claims.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the scope of the present invention.

## Claims

1. A removable electrical interface device (30, 41, 50, 60, 60-1, 70, 70-1, 80, 86, 90, 95, 100,110, 140) for transferring data to and from a host (40), **characterized in that** it is adapted to operate in one of a universal serial bus (USB) compatible mode, a Mu mode and a non-USB compatible mode, and that it comprises:
a first row (51, 61, 71, 81, 87) of contact pads (714, 1-4, 13), capable of supporting at least one of a USB Standard-A connection, a Mu mode connection, or a non-USB compatible mode connection; and
a second row (52, 62, 82, 88) of contact pads (5-12, 5-13) capable of supporting at least one of the Mu mode connection or the non-USB compatible mode connection.

2. Device according to claim 1, wherein the first row of contact pads is connectible to or removable from a USB Standard-A receptacle of the host (40).

3. Device (30, 41, 50, 70, 70-1, 86, 90, 95, 100, 110, 145) according to one of claims 1 or 2, wherein the first row of contact pads is disposed near a first side (53, 63, 73, 83, 89, 145-1), of the removable electrical interface device in an insertion direction towards the host (40), and the second row of contact pads is disposed closer to the first row of contact pads than a second side of the removable electrical interface device in the insertion direction.

4. Device (30, 41, 60, 60-1, 80) according to one of claims 1 to 3, wherein the first row of contact pads is disposed near a first side (53, 63, 73, 83, 145-1) of the removable electrical interface device in an insertion direction towards the host (40), and the second row of contact pads is disposed near a second side (65, 85) of the removable electrical interface device in the insertion direction.

5. Device (50) according to one of claims 1 to 4, further comprising a notch (54), formed in a corner of the removable electric interface device.

6. Device (70-1) according to one of claims 1 to 5, wherein one (13) of the first row of contact pads is disposed farther to the first side than the other of the first row of contact pads to facilitate card detection.

7. Device (86) according to one of claims 1 to 5, wherein one (9) of the second row of contact pads is disposed farther to the first side than the other of the second row of contact pads to facilitate card detection.

8. Device (86) according to one of claims 1 to 7, wherein at least one (5, 13) of the second row of contact pads extends in an insertion direction towards the host (40) to exceed one end of at least one of the first row of contact pads.

9. Device (90, 95, 100) according to one of claims 1 to 8, comprising an electronic card (91, 96, 101, 111) comprising said first and second rows of contact pads, and a carrier (92, 97, 102, 112) for supporting the electronic card.

10. Device according to claim 9, wherein the carrier is suitable for use with one of a USB Standard-A receptacle and an electronic device having a receptacle width smaller than the USB Standard-A receptacle.

11. Device (95, 110) according to one of claims 9 or 10, wherein the carrier includes at least one guide trench (98-1, 98-2, 118-1, 118-2) extending substantially in parallel with an insertion direction of the carrier.

12. Device (110) according to one of claims 9 to 11, further comprising a connector (113) capable of providing extended-USB connection.

13. Device according to claim 12, wherein the connector includes a Mini USB connector.

14. Device (90) according to one of claims 9 to 13, further comprising an adapter (99-1, 99-2) capable of receiving the electronic card and the carrier.

15. Device according to claim 14, wherein the adapter supports one of 4-bit MMC connection and 8-bit MMC connection.

16. Device according to claim 14, wherein the adapter supports one of 4-bit MMC connection and 4-bit SD connection.

17. Device (140) according to one of claims 1 to 8, comprising an adapter (145) which comprises:
said first and second rows of contact pads,
a first terminal (145-1) being connectible to or removable from a USB Standard-A receptacle of the host (40); and
a second terminal (145-2) capable of receiving a memory card.

18. Device according to claim 17, wherein the second terminal is capable of receiving one of an MMC micro memory card and a micro SD memory card.

19. Device according to one of claims 17 or 18, wherein the second terminal is capable of receiving a memory card that includes an indentation (150-1) on a peripheral thereof.

20. Device according to one of claims 1 to 19, comprising:
a common bus (42)
a non-USB interface controller (34),
a USB physical layer circuit (36),
a USB device controller 37, and
a wrapper (35) to convert data into serial data recognizable by the USB device controller (37), or vice versa.

21. Device according to claim 20, comprising an interface mode detector (32) arranged between, on the one hand, the common bus (42), and on the other hand, the non-USB interface controller (34), the USB physical layer circuit (36) and the wrapper (35), to detect a mode of operation to distinguish among a non-USB mode, a USB mode or a Mu mode.

22. Device according to claim 20, comprising a control unit (42) including a central control logic and a bus control logic for selecting one of non-USB interface controller (34), wrapper (35) and USB physical layer circuit (36) over common bus (42).

## Patentansprüche

1. Abnehmbare elektrische Schnittstellenvorrichtung (30, 41, 50, 60, 60-1, 70, 70-1, 80, 86, 90, 95, 100, 110, 140) zum Übertragen von Daten zu einem und von einem Hauptcomputer (40), **dadurch gekennzeichnet, dass** sie zum Operieren in einem Element aus einem USB-(Universal Serial Bus)-Kompatiblen Modus, einem Mu-Modus und einem nicht-USB-kompatiblen Modus ausgelegt ist und dass sie Folgendes umfasst:
eine erste Reihe (51, 61, 71, 81, 87) von Kontaktpads (714, 1-4, 13), die mindestens ein Element aus einem USB-Standard-A-Anschluss, einem Modusanschluss oder einem nicht-USB-kompatiblen Modusanschluss tragen kann; und
eine zweite Reihe (52, 62, 82, 88) von Kontaktpads (5-12, 5-13), die mindestens ein Element aus dem Mu-Modusanschluss oder dem nicht-USB-kompatiblen Modusanschluss tragen kann.

2. Vorrichtung nach Anspruch 1, wobei die erste Reihe von Kontaktpads an eine USB-Standard-A-Buchse des Hauptcomputers (40) anschließbar oder von derselben trennbar ist.

3. Vorrichtung (30, 41, 50, 70, 70-1, 86, 90, 95, 100, 110, 145) nach einem der Ansprüche 1 oder 2, wobei die erste Reihe von Kontaktpads in der Nähe einer ersten Seite (53, 63, 73, 83, 89, 145-1) der abnehmbaren elektrischen Schnittstellenvorrichtung in einer Einführungsrichtung zum Hauptcomputer (40) hin angeordnet ist und die zweite Reihe von Kontaktpads näher an der ersten Reihe von Kontaktpads als eine zweite Seite der abnehmbaren elektrischen Schnittstellenvorrichtung in der Einführungsrichtung angeordnet ist.

4. Vorrichtung (30, 41, 60, 60-1, 80) nach einem der Ansprüche 1 bis 3, wobei die erste Reihe von Kontaktpads in der Nähe einer ersten Seite (53, 63, 73, 83, 145-1) der abnehmbaren elektrischen Schnittstellenvorrichtung in einer Einführungsrichtung zum Hauptcomputer (40) hin angeordnet ist und die zweite Reihe von Kontaktpads in der Nähe einer zweiten Seite (65, 85) der abnehmbaren elektrischen Schnittstellenvorrichtung in der Einführungsrichtung angeordnet ist.

5. Vorrichtung (50) nach einem der Ansprüche 1 bis 4, die ferner eine Kerbe (54) umfasst, welche in einer Ecke der abnehmbaren elektrischen Schnittstellenvorrichtung gebildet ist.

6. Vorrichtung (70-1) nach einem der Ansprüche 1 bis 5, wobei eine (13) erste Reihe von Kontaktpads weiter weg von der ersten Seite als die andere erste Reihe von Kontaktpads angeordnet ist, um die Feststellung von Karten zu erleichtern.

7. Vorrichtung (86) nach einem der Ansprüche 1 bis 5, wobei eine (9) zweite Reihe von Kontaktpads weiter weg von der ersten Seite als die andere zweite Reihe von Kontaktpads angeordnet ist, um die Feststellung von Karten zu erleichtern.

8. Vorrichtung (86) nach einem der Ansprüche 1 bis 7, wobei mindestens eine (5, 13) zweite Reihe von Kontaktpads sich in einer Einführungsrichtung zum Hauptcomputer (40) erstreckt, um ein Ende der mindestens einen ersten Reihe von Kontaktpads zu überschreiten.

9. Vorrichtung (90, 95, 100) nach einem der Ansprüche 1 bis 8, die eine elektronische Karte (91, 96, 101, 111), welche die ersten und zweiten Reihen von Kontaktpads umfasst, und einen Träger (92, 97, 102, 112) zum Tragen der elektronischen Karte umfasst.

10. Vorrichtung nach Anspruch 9, wobei der Träger sich zur Verwendung mit einem Element aus einer USB-Standard-A-Buchse und einer elektronischen Vorrichtung eignet, welche eine Buchsenbreite hat, die kleiner als die der USB-Standard-A-Buchse ist.

11. Vorrichtung (95, 110) nach einem der Ansprüche 9 oder 10, wobei der Träger mindestens einen Führungsschlitz (98-1, 98-2, 118-1, 118-2) umfasst, der sich im Wesentlichen parallel zu einer Einführungsrichtung des Trägers erstreckt.

12. Vorrichtung (110) nach einem der Ansprüche 9 bis 11, die ferner einen Verbinder (113) umfasst, welcher für eine erweiterte USB-Verbindung sorgen kann.

13. Vorrichtung nach Anspruch 12, wobei der Verbinder einen Mini-USB-Verbinder umfasst.

14. Vorrichtung (90) nach einem der Ansprüche 9 bis 13, die ferner einen Adapter (99-1, 99-2) umfasst, welcher die elektronische Karte und den Träger aufnehmen kann.

15. Vorrichtung nach Anspruch 14, wobei der Adapter ein Element aus einer 4-Bit-MMC-Verbindung und einer 8-Bit-MMC-Verbindung trägt.

16. Vorrichtung nach Anspruch 14, wobei der Adapter ein Element aus einer 4-Bit-MMC-Verbindung und einer 4-Bit-SD-Verbindung trägt.

17. Vorrichtung (140) nach einem der Ansprüche 1 bis 8, die einen Adapter (145) umfasst, welcher Folgendes umfasst:
die ersten und zweiten Reihe von Kontaktpads,
ein erstes Terminal (145-1), das an eine USB-Standard-A-Buchse des Hauptcomputers (40) angeschlossen oder von derselben gelöst werden kann; und
ein zweites Terminal (145-2), das eine Speicherkarte aufnehmen kann.

18. Vorrichtung nach Anspruch 17, wobei das zweite Terminal ein Element aus einer MMC-Mikrospeicherkarte und einer Mikro-SD-Speicherkarte aufnehmen kann.

19. Vorrichtung nach einem der Ansprüche 17 oder 18, wobei das zweite Terminal eine Speicherkarte aufnehmen kann, welche einen Einschnitt (150-1) an einer Peripherie derselben umfasst.

20. Vorrichtung nach einem der Ansprüche 1 bis 19, umfassend:
eine gemeinsame Busleitung (42),
einen nicht-USB-Schnittstellencontroller (34),
eine physikalische USB-Schichtschaltung (36),
einen USB-Gerätecontroller (37) und
einen Wrapper (35) zum Umwandeln von Daten in serielle Daten, die vom USB-Gerätecontroller (37) erkannt werden können oder umgekehrt.

21. Vorrichtung nach Anspruch 20, die einen Schnittstellenmodusdetektor (32) umfasst, der einerseits zwischen der gemeinsamen Busleitung (42) und andererseits auf dem nicht-USB-Schnittstellencontroller (34), der physikalischen USB-Schichtschaltung (36) und dem Wrapper (35) angeordnet ist, um einen Betriebsmodus festzustellen, um zwischen einem nicht-USB-Modus, einem USB-Modus oder einem Mu-Modus zu unterscheiden.

22. Vorrichtung nach Anspruch 20, die eine Steuereinheit (42) einschließlich einer zentralen Steuerlogik und einer Bus-Steuerlogik zum Auswählen eines Elementes aus einem nicht-USB-Schnittstellencontroller (34), Wrapper (35) und einer physikalischen USB-Schichtschaltung (36) über der gemeinsamen Busleitung (42) umfasst.

## Revendications

1. Dispositif (30, 41, 50, 60, 60-1, 70, 70-1, 80, 86, 90, 95, 100, 110, 140) d'interface électrique amovible destiné à transférer des données vers et en provenance d'un hôte (40), **caractérisé en ce qu'**il est prévu pour fonctionner dans un mode compatible avec un bus série universel (USB), dans un mode Mu ou dans un mode non compatible USB, et **en ce qu'**il comporté :
une première rangée (51, 61, 71, 81, 87) de plages (714, 1-4, 13) de contact, capable de prendre en charge au moins une connexion parmi une connexion USB à la norme A, une connexion en mode Mu, ou une connexion en mode non compatible USB ; et
une deuxième rangée (52, 62, 82, 88) de plages (5-12, 5-13) de contact capable de prendre en charge au moins une connexion parmi la connexion en mode Mu ou the connexion en mode non compatible USB.

2. Dispositif selon la revendication 1, la première rangée de plages de contact susceptible d'être connectée à une prise USB à la norme A de l'hôte (40) ou d'en être retirée.

3. Dispositif (30, 41, 50, 70, 70-1, 86, 90, 95, 100, 110, 145) selon l'une des revendications 1 et 2, la première rangée de plages de contact étant disposée près d'un premier côté (53, 63, 73, 83, 89, 145-1), du dispositif d'interface électrique amovible dans une direction d'insertion vers l'hôte (40), et la deuxième rangée de plages de contact étant disposée plus près de la première rangée de plages de contact qu'un deuxième côté du dispositif d'interface électrique amovible dans la direction d'insertion.

4. Dispositif (30, 41, 60, 60-1, 80) selon l'une des revendications 1 à 3, la première rangée de plages de contact étant disposée près d'un premier côté (53, 63, 73, 83, 145-1) du dispositif d'interface électrique amovible dans une direction d'insertion vers l'hôte (40), et la deuxième rangée de plages de contact étant disposée près d'un deuxième côté (65, 85) du dispositif d'interface électrique amovible dans la direction d'insertion.

5. Dispositif (50) selon l'une des revendications 1 à 4, comportant en outre une encoche (54) formée dans un coin du dispositif d'interface électrique amovible.

6. Dispositif (70-1) selon l'une des revendications 1 à 5, une plage (13) de la première rangée de plages de contact étant disposée plus loin vers le premier côté que les autres plages de la première rangée de plages de contact pour faciliter la détection d'une carte.

7. Dispositif (86) selon l'une des revendications 1 à 5, une plage (9) de la deuxième rangée de plages de contact étant disposée plus loin vers le premier côté que les autres plages de la deuxième rangée de plages de contact pour faciliter la détection d'une carte.

8. Dispositif (86) selon l'une des revendications 1 à 7, au moins une plage (5, 13) de la deuxième rangée de plages de contact s'étendant dans une direction d'insertion vers l'hôte (40) pour dépasser une extrémité d'au moins une plage de la première rangée de plages de contact.

9. Dispositif (90, 95, 100) selon l'une des revendications 1 à 8, comportant une carte électronique (91, 96, 101, 111) comportant lesdites première et deuxième rangées de plages de contact, et un support (92, 97, 102, 112) servant à soutenir la carte électronique.

10. Dispositif selon la revendication 9, le support étant apte à être utilisé soit avec une prise USB à la norme A, soit avec un dispositif électronique présentant une largeur de prise inférieure à celle de la prise USB à la norme A.

11. Dispositif (95, 110) selon l'une des revendications 9 et 10, le support comprenant au moins une tranchée (98-1, 98-2, 118-1, 118-2) de guidage s'étendant sensiblement en parallèle avec une direction d'insertion du support.

12. Dispositif (110) selon l'une des revendications 9 à 11, comportant en outre un connecteur (113) capable d'assurer une connexion de type USB étendu.

13. Dispositif selon la revendication 12, le connecteur comprenant un connecteur Mini USB.

14. Dispositif (90) selon l'une des revendications 9 à 13, comportant en outre un adaptateur (99-1, 99-2) capable de recevoir la carte électronique et le support.

15. Dispositif selon la revendication 14, l'adaptateur prenant en charge soit une connexion MMC 4 bits, soit une connexion MMC 8 bits.

16. Dispositif selon la revendication 14, l'adaptateur prenant en charge soit une connexion MMC 4 bits, soit une connexion SD 4 bits.

17. Dispositif (140) selon l'une des revendications 1 à 8, comportant un adaptateur (145) qui comporte :
lesdites première et deuxième rangées de plages de contact,
une première borne (145-1) susceptible d'être connectée à une prise USB à la norme A de l'hôte (40) ou d'en être retirée ; et
une deuxième borne (145-2) capable de recevoir une carte à mémoire.

18. Dispositif selon la revendication 17, la deuxième borne étant capable de recevoir soit une microcarte à mémoire MMC, soit une carte à mémoire micro-SD.

19. Dispositif selon l'une des revendications 17 et 18, la deuxième borne étant capable de recevoir une carte à mémoire comprenant une indentation (150-1) sur sa périphérie.

20. Dispositif selon l'une des revendications 1 à 19, comportant :
un bus commun (42),
un contrôleur (34) d'interface non-USB,
un circuit (36) de couche physique USB,
un contrôleur (37) de dispositif USB et
un conditionneur (35) servant à convertir des données en données série reconnaissables par le contrôleur (37) de dispositif USB, ou vice versa.

21. Dispositif selon la revendication 20, comportant un détecteur (32) de mode d'interface disposé entre, d'une part, le bus commun (42) et, d'autre part, le contrôleur (34) d'interface non-USB, le circuit (36) de couche physique USB et le conditionneur (35), pour détecter un mode de fonctionnement afin d'établir une distinction entre un mode non-USB, un mode USB et un mode Mu.

22. Dispositif selon la revendication 20, comportant une unité (42) de commande comprenant une logique de commande centrale et une logique de commande de bus servant à sélectionner un élément parmi le contrôleur (34) d'interface non-USB, le conditionneur (35) et le circuit (36) de couche physique USB via le bus commun (42).
